# FASCICULE DE BREVET EUROPEEN

(11) **EP 0 586 650 B1**
(45) Date de publication et mention de la délivrance du brevet: **20.01.1999**
(21) Numéro de dépôt: 93905420.1
(22) Date de dépôt: 24.02.1993
(51) Int. Cl.: B01J 2/30, C05G 3/00

(54) **Compositions antimottantes et traitments mettant ces compositions en oeuvre**
Zusammensetzungen, die Produkte enthalten, die das Zusammenbacken verhindern und Behandlungen mit diesen Zusammensetzungen
Anticlotting compositions and treatments using these compositions

(30) Priorité: 28.02.1992 FR 9202409
(43) Date de publication de la demande: 16.03.1994
(73) Titulaire: CFPI INDUSTRIES, 92233 Gennevilliers (FR)
(72) Inventeur: SCHAPIRA, Joseph, F-75015 Paris (US); CHEMINAUD, Jean-Claude, F-95220 Herblay (FR); PETITBON, Pascal, F-92230 Gennevilliers (FR); IMBERT, Dominique, F-92400 Courbevoie (FR)
(74) Mandataire: Koch, Gustave
(86) Numéro de dépôt international: FR9300181
(87) Numéro de publication internationale: WO9316793

(56) Documents cités:
- EP-A- 0 341 102
- FR-A- 1 239 004
- CHEMICAL ABSTRACTS, vol. 102, no. 19, 13 Mai 1985, Columbus, Ohio, US; abstract no. 165899n, VAGANOV V,P, ET AL. 'PREVENTIG CAKING OF AMMONIUM NITRATE' page 547 ;

## Description

L'invention a pour objet des compositions antimottantes, c'est-à-dire propres à empêcher la prise en masse des sels, engrais simples et complexes ainsi que des dérivés azotés, notamment à base de nitrate d'ammonium, et qui peuvent en particulier être utilisés dans les explosifs.

Elle vise également les traitements antimottants mettant lesdites compositions en oeuvre ainsi que les matériaux obtenus à l'issue des traitements en question.

Les sels et engrais simples comprennent les sels azotés, notamment les sulfates mono- et diammoniques ainsi que les nitrates d'ammonium, de potassium et de calcium.

Les nitrates peuvent être des nitrates dits industriels et des nitrates dits poreux obtenus généralement par prilling ou par granulation; ils peuvent contenir des additifs "de procédé" contribuant à l'obtention de leurs propriétés finales, par exemple la dureté, l'humidité, la porosité et le pouvoir d'absorption de fuel ou d'huile; parmi ces additifs, on peut citer des sels minéraux comme le sulfate d'aluminium et des composés chimiques organiques comme les alkylarylsulfonates ou les alkylarylsulfonates polycondensés au formaldéhyde; parmi ces derniers composés chimiques organiques, on mentionne tout particulièrement celui qui est commercialisé sous la marque de fabrique GALORYL AT 725 par la Société Demanderesse et qui est essentiellement à base de naphtalène sulfonate de soude polycondensé au formaldéhyde.

Les engrais complexes sont des mélanges binaires ou ternaires des éléments du groupe constitué par l'azote, le phosphore ou le potassium. Ces engrais sont identifiés par des formules du type Nx, Py, Kz dans lesquelles x, y, z représentent des nombres qui désignent respectivement les pourcentages d'azote, d'anhydride phosphorique et de K₂O dans le mélange constituant l'engrais complexe.

Les engrais azotés à base d'urée comprennent les urées prillées ou granulées et les engrais complexes binaires ou ternaires dans lesquels l'azote est apporté partiellement ou en totalité par de l'urée.

Les engrais complexes peuvent également contenir des oligo-éléments minéraux comprenant des dérivés du magnésium, bore, manganèse, cette énumération n'étant pas limitative; ils peuvent également contenir des éléments organiques d'origines diverses, par exemple le guano et les déchets de cuir.

Il est connu que les sels simples ou complexes, granulés ou prillés et, plus généralement, tous les produits qui viennent d'être énumérés ont une tendance marquée à la prise en masse, ou mottage, lors du stockage.

Cette tendance à la prise en masse ou mottage dépend de très nombreux facteurs.

Certains de ces facteurs sont intrinsèques au grain et certains autres extérieurs au grain.

Parmi les facteurs intrinsèques au grain, il y a
- le procédé de fabrication qui peut être l'un de ceux du groupe comprenant le prilling, la granulation au tambour, à l'assiette ou au lit fluidisé, le compactage, le grain pouvant prendre des formes et des tailles très variées suivant le procédé retenu,
- l'origine et la nature des matières premières utilisées,
- la nature des additifs introduits au cours du procédé,
- l'humidité résiduelle du grain,
- les caractéristiques physiques du grain, telles que sa porosité, sa granulomérie, sa dureté,
- les caractéristiques cristallographiques du grain, par exemple le polymorphisme structural dans le cas du nitrate d'ammonium,
- certaines réactions chimiques qui peuvent se poursuivre même pendant le stockage.

Parmi les facteurs extérieurs au grain influant sur la tendance au mottage, il y a
- l'humidité atmosphérique,
- la température,
- la pression et le temps de stockage,
- les contraintes mécaniques que subissent les grains lors de la manutention et du transport, ces contraintes pouvant provoquer une dégradation qui favorise le mottage.

La prise en masse peut atteindre des proportions telles que l'engrais ou le sel n'est plus utilisable en l'état; la récupération du produit motté entraîne alors un surcoût inacceptable du point de vue économique.

Pour combattre le phénomène de mottage ou prise en masse, il a déjà été proposé d'avoir recours à des produits dits antimottants qui peuvent être d'origine minérale ou organique.

Parmi les produits antimottants minéraux déjà connus, on peut citer l'argile, la craie et le talc.

Parmi les produits antimottants organiques déjà connus, on peut citer les agents tensio-actifs anioniques et cationiques en formulation aqueuse ou huileuse. Les agents tensio-actifs cationiques les plus largement utilisés sont les amines grasses dont essentiellement la stéarylamine et les affines de suif hydrogénées à base de stéarylamine; les agents tensio-actifs anioniques comprennent les alkylarylsulfonates, certains dérivés d'acides gras et (EP-A-113 687) certains dérivés, à savoir les sels d'amines d'esters phosphoriques acides.

Il est déjà connu, par le document antérieur SU-A-1 131 859, d'utiliser comme agent antimottant un mélange comprenant un monohydrophosphate de potassium et des sels de potassium d'ester phosphorique exempts de tout groupe OH.

Il a été proposé d'associer ces produits antimottants avec des polymères ou avec des agents tensio-actifs non ioniques.

Ces produits présentent toutefois le défaut de migrer à un certain degré au sein de la matière traitée, ce qui peut entraîner une dégradation du grain, elle-même susceptible de se traduire par une perte d'efficacité de l'antimottage.

Et devant les exigences croissantes de l'utilisateur, la Société Demanderesse a poursuivi ses recherches et a eu le mérite de trouver qu'il était possible d'éviter ces phénomènes de migration et les inconvénients qui en résultent en ayant recours à certains sels métalliques des esters de phosphates acides, ce grâce à quoi il devient au surplus possible de traiter les sels et engrais sujets au mottage sans recours à un enrobant minéral et de conférer à la matière traitée, outre d'excellentes propriétés antimottantes, des caractéristiques antipoussière remarquables même lors de stockages prolongés à température élevée.

Il s'ensuit que la composition antimottante conforme comprend
- un produit antimottant constitué par un sel métallique d'un ester de phosphate acide de formules générales I et II: 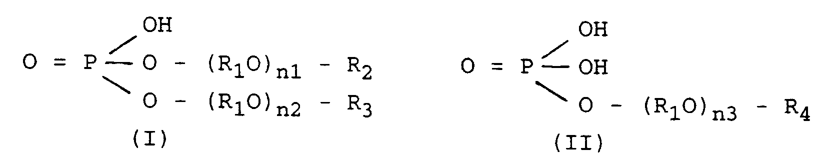 dans lesquelles:
   - R₁ représente un groupe alcoylène ayant de 2 à 4 atomes de carbone,
   - R₂, R₃ et R₄ représentent chacun un groupe alcoyle ayant de 2 à 24 atomes de carbone ou un groupe alcoyl-aryle dont la partie alcoylée a de 1 à 18 atomes de carbone,
   - n₁, n₂ et n₃ représentent un nombre entier de 0 à 15, le cation entrant dans la constitution du susdit sel métallique étant un cation divalent ou trivalent, notamment l'un de ceux du groupe comprenant le magnésium, le calcium, l'aluminium, le zinc et le manganèse, et
- un agent de formulation choisi dans le groupe constitué par les huiles et cires de préférence naturelles ou synthétiques.

Les susdits esters de phosphates acides peuvent être préparés par réaction directe de l'anhydride phosphorique sur un composé à groupe hydroxyle du groupe comprenant les alcools, alcoylphénols, alcoylnaphtols et polyols.

Pour des raisons économiques, on a le plus souvent recours, parmi les composés à groupe hydroxyle, à des produits dits techniques correspondant à des mélanges.

La réaction d'estérification conduit à des mélanges de mono- et diesters, dans lesquels le rapport mono/ diester peut varier.

Pour préparer les sels métalliques des susdits esters de phosphates acides, on peut faire réagir l'oxyde métallique ou l'hydroxyde du cation choisi sur l'ester de phosphate acide. En général, la réaction se fait à température élevée, notamment de 80 à 100°C. Avantageusement, on la réalise après dilution légère dans une huile minérale.

Il n'est pas nécessaire que la totalité des fonctions hydroxyles de l'ester de phosphate acide soit neutralisée; de préférence, 40% au moins de ces fonctions sont neutralisées.

La composition antimottante conforme à l'invention peut comprendre au moins un autre produit antimottant choisi avantageusement dans le groupe comprenant les acides gras et leurs sels.

Parmi les susdits acides gras, on a recours de préférence à ceux ayant de 12 à 20 atomes de carbone et préférentiellement à l'acide stéarique.

Le sel de l'acide gras peut être identique à celui de l'ester de phosphate acide ou différent.

Les susdites huiles peuvent être d'origine végétale mais on préfère les huiles minérales pour des raisons économiques.

On peut utiliser des huiles minérales paraffiniques ou naphténiques, par exemple des huiles de base paraffiniques dont les caractéristiques sont les suivantes:
- - masse volumique à 15°C: 875 kg/m³
- - viscosité cinématique à 40°C: 20 mm²/s.

De nombreuses sociétés pétrolières commercialisent des huiles ayant ces caractéristiques; ainsi, on peut citer l'huile 100 S de la Société TOTAL, celle commercialisée sous la marque ENERPAR 10 par la Société B.P.; on peut citer également des huiles à caractère plus naphténique telles que celle commercialisée sous la marque NYTEX 810 par la Société NYNAS.

Il est également possible de choisir des huiles plus visqueuses (viscosité cinématique à 40°C, 475 mm²/s) comme celle commercialisée sous la marque PROREX 25 par la Société MOBIL.

Parmi les cires, on peut choisir une cire de paraffine ayant les caractéristiques suivantes:
- - point de fusion: 55 à 80°C
- - viscosité cinématique à 100°: 8 à 25 mm²/s.

Les proportions des divers constituants dans les compositions conformes à l'invention résultent du tableau I.

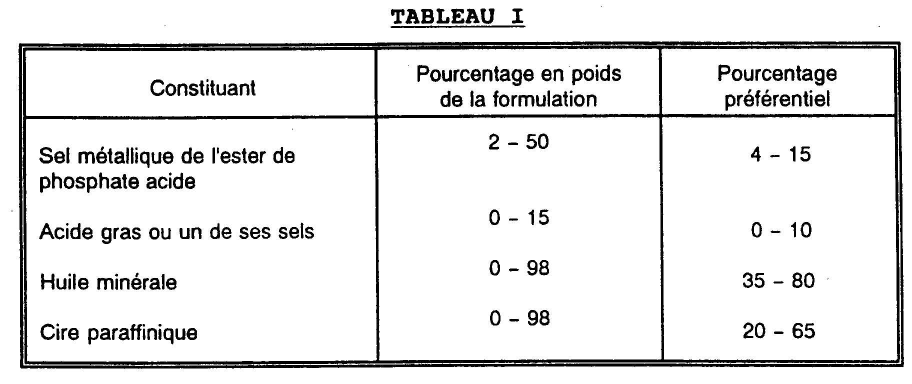

Le traitement antimottant conforme à l'invention est caractérisé par le fait qu'on incorpore au produit à antimotter une quantité efficace de la composition antimottante conforme à l'invention.

La susdite quantité efficace est de 0,01 à 0,5% en poids par rapport au produit à antimotter et avantageusement comprise entre 0,05 et 0,25%.

L'incorporation est généralement réalisée lorsque le sel ou engrais a acquis la presque totalité de ses propriétés physiques et mécaniques finales; elle peut être réalisée par pulvérisation à une température d'environ 80°C à l'aide d'un système approprié permettant une répartition homogène sur le produit traité.

Dans la pratique, l'incorporation a généralement lieu dans des tambours enrobeurs situés après le refroidisseur de l'installation de fabrication du produit à antimotter. La température du produit à antimotter est généralement située au-dessous de 40°C. L'humidité du produit à antimotter est généralement, à ce stade, inférieure à 1%. Dans certains cas particuliers, ledit produit, c'est-à-dire le sel ou l'engrais, peut être à une température située entre 40 et 80°C, le refroidissement complémentaire étant effectué après l'application de la composition antimottante.

Il est toujours possible d'ajouter un enrobant minéral avant ou après l'application de la composition antimottante, mais une des caractéristiques essentielles des produits antimottants selon l'invention est qu'ils permettent avantageusement la suppression de ces enrobants avec, comme conséquence, l'élimination de la poussière qui leur serait imputable.

L'invention sera encore mieux comprise à l'aide des exemples non limitatifs qui suivent et dans lesquels sont décrits, plus particulièrement en comparaison avec l'art antérieur, des modes de réalisation avantageux de l'invention.

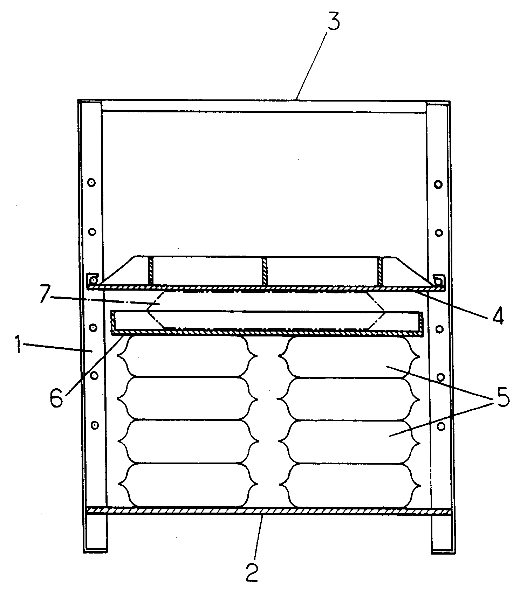

Pour illustrer les propriétés des produits antimottants conformes à l'invention, on a traité dans ces exemples, des sels ou engrais qui sont ensuite conditionnés dans des sacs en polyéthylène; ces sacs sont, à leur tour, empilés dans un module de mottage du type de celui illustré par la figure unique.

Comme montré sur cette figure, le module de mottage comprend une armature métallique constituée de montants 1, d'un plateau de charge 2, d'entretoises 3 et d'un plateau fixe 4.

Des sacs 5 en polyéthylène remplis de produit à tester (sel ou engrais traité par le produit conforme à l'invention), sont empilés comme montré sur le plateau 2.

Un plateau 6 portant un coussin de levage 7 est posé sur la pile de sacs. En gonflant le coussin à l'air comprimé entre le plateau mobile 6 et le plateau fixe 4, on transmet une pression à la pile de sacs.

Cette pression appliquée est variable et peut simuler une pile de sacs de 12 m de haut.

L'engrais est maintenu sous pression pendant un temps plus ou moins long, en général de 10 à 45 jours, parfois de plusieurs mois. A la fin du test, les sacs sont ouverts. Les mottes sont pesées et la dureté des mottes est mesurée à l'aide d'un dynamomètre.

Le mottage est exprimé en pourcentage de mottes (entre 0 et 100).

La dureté des mottes est généralement comprise entre 0 et 100 N; elle peut atteindre 300 N pour les témoins non traités.

On caractérise le résultat obtenu par ce qu'on appelle l'indice de mottage, cet indice étant le produit du pourcentage de mottes par la dureté des mottes.

Chaque résultat enregistré correspond à la moyenne des résultats mesurés sur plusieurs sacs (en général 4).

Dans les exemples qui suivent, on a traité des engrais ou sels réputés pour la difficulté qu'il y a à les empêcher de motter.

### EXEMPLE 1

On applique différents traitements antimottants sur un engrais complexe granulé de formule 3 x 17.

Pour obtenir tout d'abord le produit antimottant, on fait réagir 15,8 parties en poids d'anhydride phosphorique P₂O₅ sur 84,2 parties en poids d'un mélange d'alcools gras linéaires, dont la partie alkyle est constituée principalement pour 63% en C₁₆ et pour 33% en C₁₈, obtenant ainsi 50% de monoester et 50% de diester.

Ce composé est appelé produit A.

80% des fonctions hydroxyles disponibles du produit A sont ensuite neutralisées sous forme de sel de magnésium par réaction de 10 parties en poids de A sur 0,54 partie en poids d'oxyde de magnésium.

Le composé obtenu est appelé produit B.

A partir du produit B, on prépare trois compositions antimottantes dont les éléments constitutifs et leurs proportions sont réunis dans le tableau II.

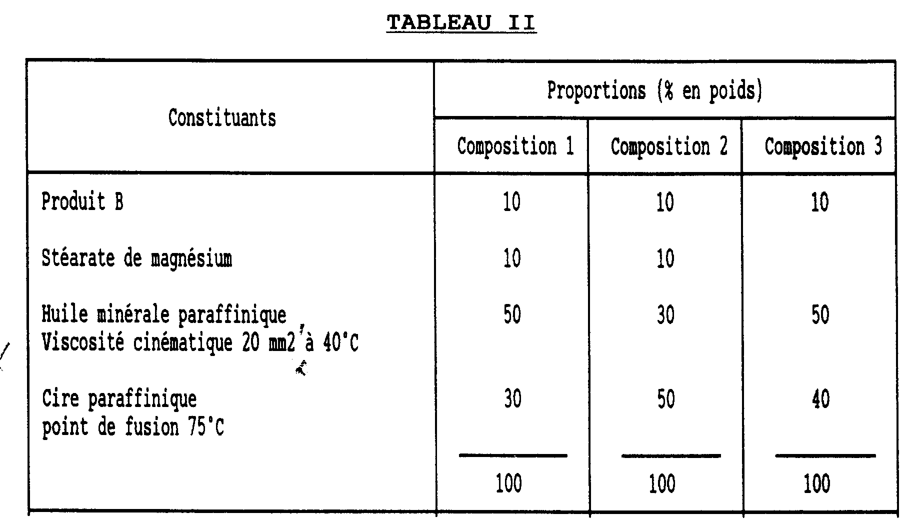

Les compositions 1 à 3 sont appliquées à raison de 0,2% en poids par rapport à l'engrais traité.

L'application est effectuée par pulvérisation à 80°C sur un engrais à 28°C.

L'engrais traité est ensuite conditionné dans des sacs de polyéthylène, puis empilé et stocké dans des modules de mottage tels que décrits en rapport avec la figure unique.

La durée du stockage dans ces modules est de 30 jours à 25°C sous une pression de 0,8 kg/cm².

On traite dans les mêmes conditions des sacs remplis du même engrais non traité.

A l'issue du stockage, les sacs sont ouverts avec précaution et l'indice de mottage est calculé selon le protocole décrit plus haut.

Les résultats enregistrés sont regroupés dans le tableau III.

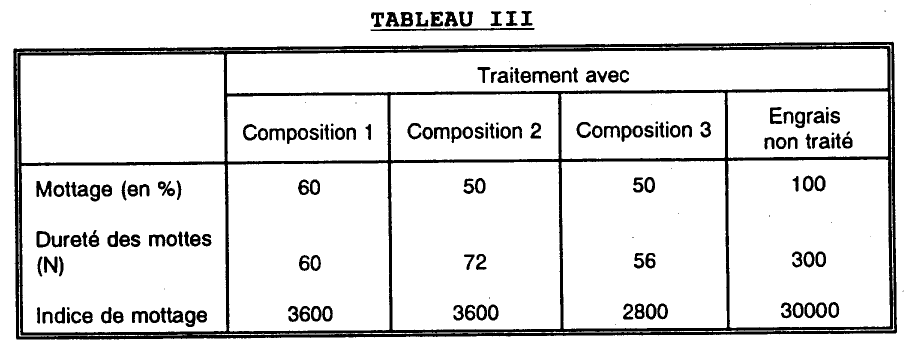

L'efficacité des compositions conformes à l'invention ressort clairement des résultats réunis dans le tableau III.

### EXEMPLE 2

On applique différents traitements antimottants sur un engrais complexe granulé de formule 15.12.24.

Dans cet exemple, on montre la supériorité des compositions antimottantes conformes à l'invention en comparaison avec des produits antimottants selon l'art antérieur mis en oeuvre avec un enrobant minéral.

Pour préparer le produit antimottant conforme à l'invention, on neutralise 50% des fonctions hydroxyles disponibles du produit A obtenu à l'exemple 1 par réaction de 9 parties en poids de produit A avec 1 partie en poids d'isopropylate d'aluminium.

Le sel d'aluminium ainsi obtenu est désigné par produit C.

On prépare deux compositions antimottantes conformes à l'invention dont les proportions et la nature des éléments constitutifs sont réunis dans le tableau IV (la composition 2 est identique à la composition 2 de l'exemple 1).

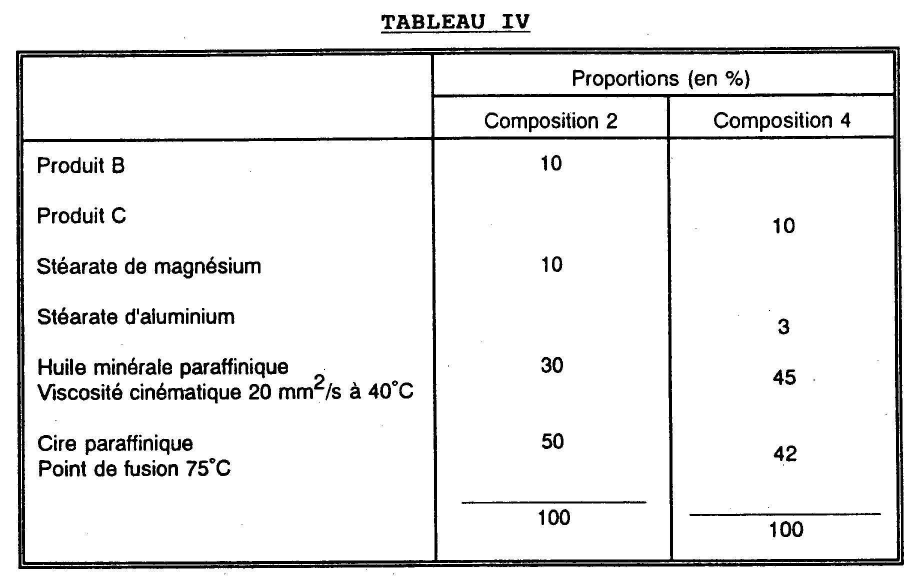

Les compositions 2 et 4 sont appliquées au susdit engrais complexe à raison de 0,2% en poids.

On soumet le même engrais complexe, à titre comparatif, à un traitement antimottant à l'aide de deux "systèmes" antimottants selon l'art antérieur appelés "Système 1" et "Système 2", à savoir:

### - Système 1

On applique 0,6% en poids par rapport à l'engrais d'une charge minérale aminée commerciale contenant 3% de stéarylamine, puis on pulvérise 0,25% en poids par rapport à l'engrais d'une coupe cireuse paraffinique.

### - Système 2

On applique 0,3% en poids par rapport à l'engrais de talc, puis on pulvérise 0,2% en poids par rapport à l'engrais traité d'huile aminée commerciale.

Dans les deux cas, l'engrais traité est à une température de 28°C; on saupoudre les charges minérales puis on pulvérise les formulations huileuses dont la température d'application est de 80°C.

On soumet l'engrais ainsi traité au test décrit dans l'exemple 1 et on effectue les mêmes mesures. La durée du test est de 20 jours, la pression est de 0,8 kg/cm² et la température de 25°C.

Les résultats enregistrés avec les compositions 2 et 4 et les Systèmes 1 et 2 sont réunis dans le tableau V.

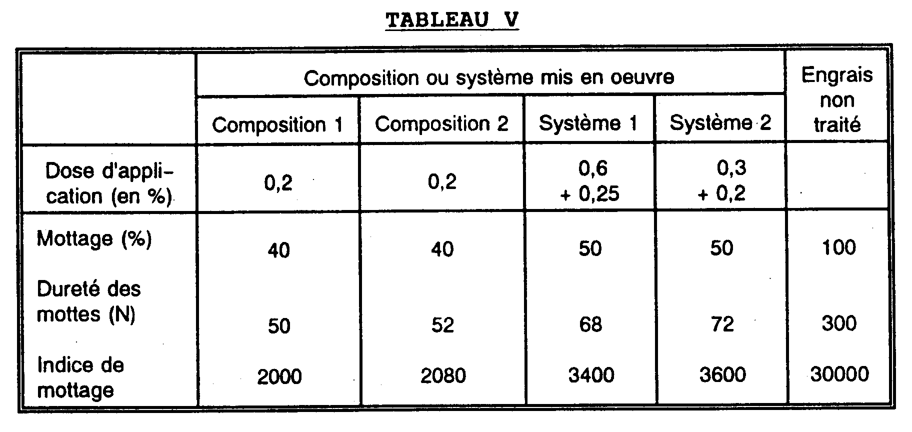

Les résultats réunis dans le tableau V montrent qu'avec les compositions conformes à l'invention, on obtient un effet antimottant supérieur à celui obtenu avec les produits de l'art antérieur mettant en oeuvre un enrobant minéral.

Grâce à l'invention, il est donc possible de supprimer l'enrobant minéral.

### EXEMPLE 3

On applique différents traitements antimottants par pulvérisation à 80°C sur un nitrate d'ammonium titrant 33,5% d'azote et dont la température est de 25°C.

Le susdit nitrate d'ammonium est obtenu par prilling du nitrate proprement dit puis "grossissement" à l'aide d'une suspension de nitrate d'ammonium et d'argile de façon à amener 43 kg d'argile par tonne de nitrate d'ammonium.

On traite ce nitrate d'ammonium à raison de 0,08% en poids par rapport à l'engrais avec les compositions 2 et 4 décrites respectivement aux exemples 1 et 2 et avec une composition 5 préparée à partir du produit C décrit dans l'exemple 2, la nature et les proportions des constituants de la composition 5 étant indiquées dans le tableau VI.

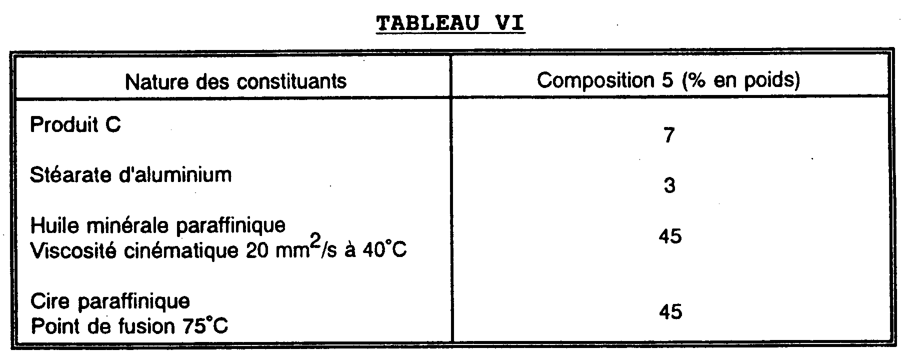

L'engrais traité est ensuite conditionné en sac de polyéthylène puis empilé dans le module de mottage conforme à la figure unique.

La durée du test est de 15 jours à température ambiante, la pression étant de 1,2 kg/cm².

Les résultats sont rassemblés dans le tableau VII ci-après.

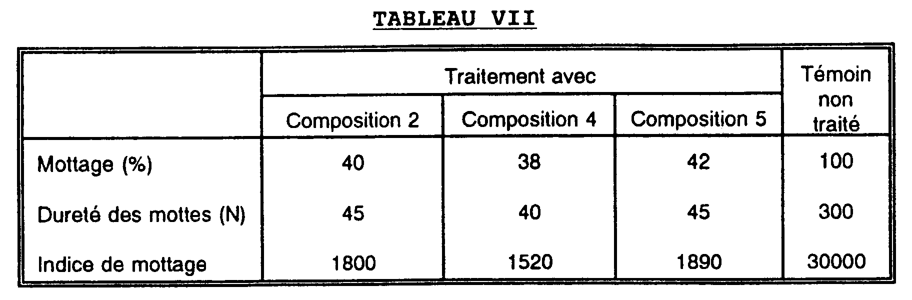

L'efficacité des compositions conformes à l'invention ressort clairement des résultats réunis dans le tableau VII.

### EXEMPLE 4

On applique différents traitements antimottants sur un engrais complexe granulé de formule 3 x 17.

On fait réagir 10 g de l'ester phosphorique acide (produit A) de l'exemple 1 avec 1,3 g de carbonate de zinc dont la teneur en zinc exprimée sous forme de ZnO est d'environ 71%, à 100°C pendant 3 heures (neutralisation de 70% des fonctions hydroxyles disponibles).

Le produit obtenu est appelé produit E.

On prépare des produits désignés F, G, H, K et L en faisant réagir respectivement 0,4 g, 0,65 g, 0,84 g, 0,9 g et 0,48 g d'oxyde de magnésium avec respectivement 10 g de chacun des esters de phosphates acides obtenus sous forme de mélanges de mono- et diesters à raison de 50% de diester à partir des alcools suivants: alcool gras C₁₂-C₁₄ avec 3 moles d'oxyde d'éthylène (produit F), alcool gras C₁₂-C₁₄ (produit G), alcools linéaires C₈-C₁₀ (Produit H), éthyl-2-hexanol (produit K) et nonylphénol avec 1,5 mole d'oxyde d'éthylène (produit L), en neutralisant ainsi 80% des fonctions hydroxyles disponibles.

A partir des produits E à L, on prépare des compositions 6 à 11. La nature et les proportions des constituants des compositions 6 à 11 sont indiquées dans le tableau VIII.

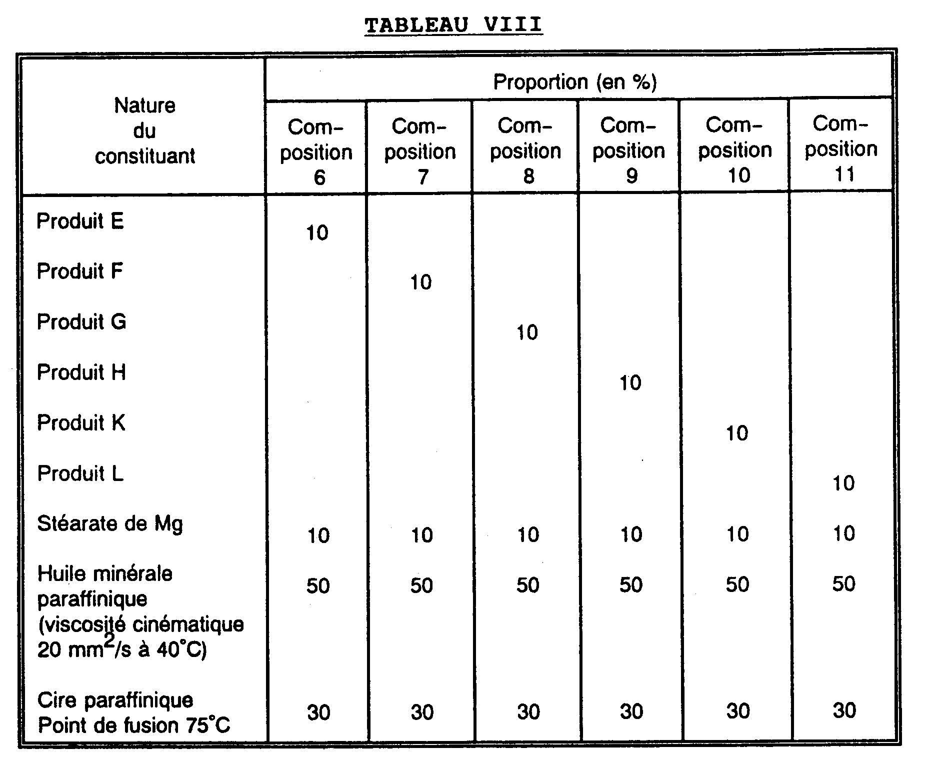

Le traitement antimottant consiste à pulvériser sur l'engrais à 28°C les compositions antimottantes 6 à 11 et la composition 1 de l'exemple 1, leur température étant de 80°C.

On procède ensuite comme indiqué à l'exemple 1.

La durée de l'empilage est de 15 jours à 28°C.

Les résultats sont regroupés dans le tableau IX.

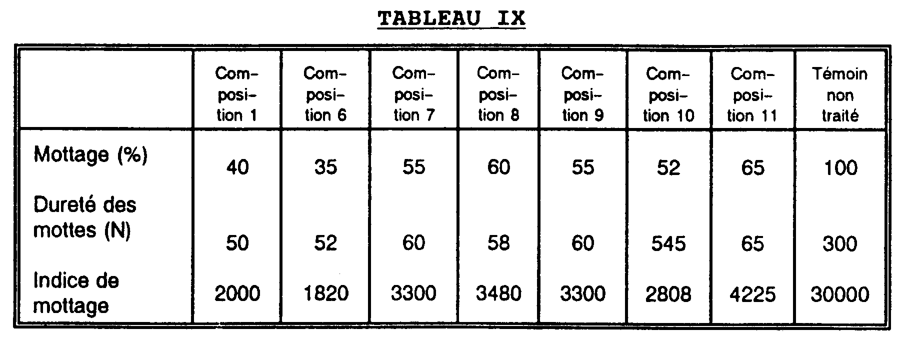

Il apparait à l'examen de ce tableau que les sels métalliques de nombreux esters de phosphates acides conduisent à d'excellents résultats.

### EXEMPLE 5

On applique différents traitements antimottants sur un nitrate d'ammonium industriel poreux prillé destiné à la fabrication d'explosifs.

Ce nitrate d'ammonium contient un adjuvant dit "de procédé" du type naphtalène sulfonate de soude polycondensé au formaldéhyde, commercialisé par la Société Demanderesse sous la marque de fabrique GALORYL AT 725.

Le nitrate d'ammonium est soumis à un traitement qui consiste en l'application de 0,1% de la composition antimottante 4 définie dans l'exemple 2, la température étant de 80°C.

Le nitrate d'ammonium ainsi traité est conditionné dans des sacs de polyéthylène et est soumis à un test de mottage dans un module de mottage correspondant à celui montré à la figure unique.

La durée de l'empilage est de 15 jours sous une pression de 0,4 kg/cm².

A l'issue de ce test, les mottes sont pesées et les duretés mesurées à l'aide d'un dynamomètre.

L'expérience est répétée en utilisant un produit selon l'art antérieur, à savoir une huile aminée commerciale à raison de 0,1% en poids par rapport au nitrate d'ammonium.

Les résultats enregistrés sont réunis dans le tableau X.

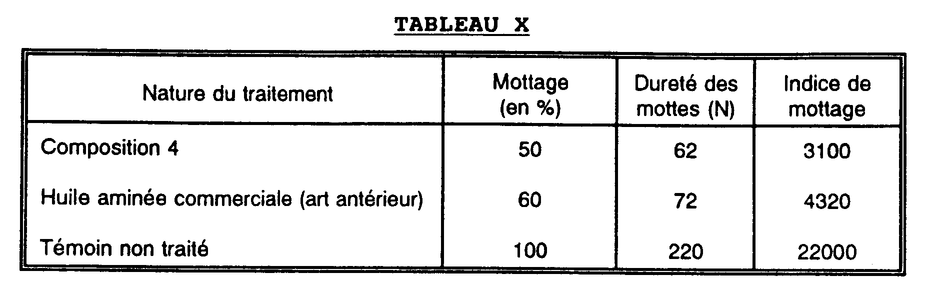

A la lecture de ce tableau, il apparaît que le produit selon l'invention présente des performances antimottantes supérieures au produit selon l'art antérieur (huile aminée).

## Revendications

1. Composition antimottante pour sels, engrais simples et complexes et pour les dérivés azotés, notamment à base de nitrate d'ammonium, pouvant en particulier être utilisés dans les explosifs, caractérisée par le fait qu'elle comprend
- un produit antimottant constitué par un sel métallique d'un ester de phosphate acide de formules générales I et II: 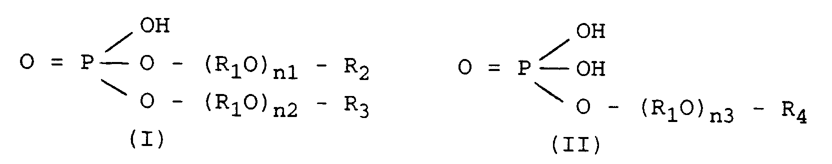 dans lesquelles:
- R₁ représente un groupe alcoylène ayant de 2 à 4 atomes de carbone,
- R₂, R₃ et R₄ représentent chacun un groupe alcoyle ayant de 2 à 24 atomes de carbone ou un groupe alcoyl-aryle dont la partie alcoylée a de 1 à 18 atomes de carbone,
- n₁, n₂ et n₃ représentent un nombre entier de 0 à 15, le cation entrant dans la constitution du susdit sel métallique étant un cation divalent ou trivalent, notamment l'un de ceux du groupe comprenant le magnésium, le calcium, l'aluminium, le zinc et le manganèse, et
- un agent de formulation choisi avantageusement dans le groupe comprenant les huiles et cires de préférence naturelles ou synthétiques.

2. Composition antimottante selon la revendication 1, caractérisée par le fait que 40% au moins des fonctions hydroxyles de l'ester de phosphate acide sont neutralisées.

3. Composition antimottante selon l'une des revendications 1 et 2, caractérisée par le fait qu'elle comprend au moins un autre produit antimottant choisi avantageusement dans le groupe comprenant les acides gras

4. et leurs sels. 4. Composition antimottante selon l'une des revendications 1 à 3, caractérisée par le fait que l'acide gras a de 12 à 20 atomes de carbone et est constitué de préférence par l'acide stéarique.

5. Composition antimottante selon l'une des revendications 1 à 4, caractérisée par le fait qu'elle comprend une huile d'origine végétale ou, de préférence, une huile d'origine minérale choisie parmi les huiles paraffiniques et les huiles naphténiques.

6. Composition antimottante selon la revendication 5, caractérisée par le fait qu'elle comprend une huile paraffinique présentant les caractéristiques suivantes:
- masse volumique à 15°C 875 kg/m³
- viscosité cinématique à 40°C 20 mm²/s.

7. Composition antimottante selon l'une des revendications 1 à 6, caractérisée par le fait qu'elle comprend une cire de paraffine présentant les caractéristiques suivantes:
- point de fusion 55 à 80°C
- viscosité cinématique à 100°C 8 à 25 mm²/s.

8. Composition antimottante selon l'une des revendications 1 à 7, caractérisée par le fait qu'elle comprend:
- de 2 à 50% en poids et, de préférence, de 4 à 15% en poids de sel métallique de l'ester de phosphate acide,
- de 0 à 15% en poids et, de préférence, de 0 à 10% en poids d'acide gras ou d'un de ses sels,
- de 0 à 98% en poids et, de préférence, de 35 à 80% en poids d'huile minérale et
- de 0 à 98% en poids et, de préférence, de 20 à 65% en poids de cire paraffinique.

9. Traitement antimottant pour sels, engrais simples et complexes et pour les dérivés azotés, notamment à base de nitrate d'ammonium, pouvant en particulier être utilisés dans les explosifs, caractérisé par le fait qu'on incorpore au produit à antimotter une quantité efficace de la composition antimottante selon l'une des revendications 1 à 8.

10. Traitement antimottant selon la revendication 9, caractérisé par le fait que la quantité efficace est de 0,01 à 0,5% en poids par rapport au produit à antimotter et avantageusement comprise entre 0,05 et 0,25%.

## Claims

1. Anti-clumping composition for salts, simple and complex fertilizers as well as for nitrogenous derivatives, especially on the basis of ammonium nitrate, which might in particular be used in connection with explosives, characterized by the fact that it comprises
- an anti-clumping product consisting of a metallic salt of an acid phosphate ester having the general formulas I and II: 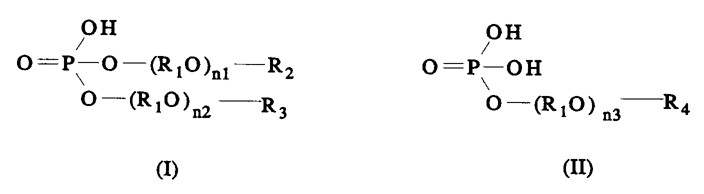 wherein:
- R₁ represents an alkylene group having from 2 to 4 carbon atoms,
- R_{1,} R₂ and R₄ represent each an alkyl group having from 2 to 24 carbon atoms, or an alkylaryl group whose alkyl part has from 1 to 18 carbon atoms, and
- n₁, n₂ and n₃ represent an integer from 0 to 15, the cation which is part of the constitution of the above-said metallic salt being a divalent or trivalent cation, especially one of those of the group comprising magnesium, calcium, aluminum, zinc and manganese, and
- a formulation agent advantageously selected from the group comprising oils and waxes, preferably from natural or synthetic origin.

2. Anti-clumping composition according to claim 1, characterized by the fact that at least 40% of the hydroxyl functions of the acid phosphate ester are neutralized.

3. Anti-clumping composition according to one of claims 1 and 2, characterized by the fact that it comprises at least one other anti-clumping product advantageously selected from the group comprising fatty acids and their salts.

4. Anti-clumping composition according to one of claims 1 to 3, characterized by the fact that the fatty acid has from 12 to 20 carbon atoms and is preferably consisting of stearic acid.

5. Anti-clumping composition according to one of claims 1 to 4, characterized by the fact that it comprises an oil of vegetal origin or, preferably, a mineral oil selected from the paraffinic and naphthenic oils.

6. Anti-clumping composition according to claim 5, characterized by the fact that it comprises a paraffinic oil having the following characteristics:
- volumic mass at 15°C 875 kg/m³
- cinematic viscosity at 40°C 20 mm²/s.

7. Anti-clumping composition according to one of claims 1 to 6, characterized by the fact that it comprises a paraffin wax having the following characteristics:
- melting point 55 to 80°C
- cinematic viscosity at 100°C 8 to 25 mm²/s.

8. Anti-clumping composition according to one of claims 1 to 7, characterized by the fact that it comprises:
- from 2 to 50% by weight and, preferably, from 4 to 15% by weight of metallic salt of the acid phosphate ester,
- from 0 to 15% by weight and, preferably, from 0 to 10% by weight of fatty acid or one of its salts,
- from 0 to 98% by weight and, preferably, from 35 to 80% by weight of mineral oil and
- from 0 to 98% by weight and, preferably, from 20 to 65% by weight of a paraffinic wax.

9. Anti-clumping treatment for salts, simple and complex fertilizers as well as for nitrogenous derivatives, especially on the basis of ammonium nitrate, which might in particular be used in connection with explosives, characterized by the fact that an efficient amount of the anti-clumping composition according to one of claims 1 to 8 is incorporated to the product which is to be subjected to the anti-clumping treatment.

10. Anti-clumping treatment according to claim 9, characterized by the fact that the efficient amount is from 0.01 to 0.5% by weight with respect to the product to be treated and advantageously comprised between 0.05 and 0.25%.

## Patentansprüche

1. Klumpenverhindernde Zusammensetzung für Salze, einfache und komplexe Düngemittel und für Stickstoff-Derivate, insbesondere auf Ammoniumnitrat-Basis, die besonders in Sprengstoffen verwendet werden können,
**dadurch gekennzeichnet, daß** sie
- ein klumpenverhinderndes Produkt, gebildet durch ein Metallsalz eines Phosphorsäureesters der allgemeinen Formeln I und II: 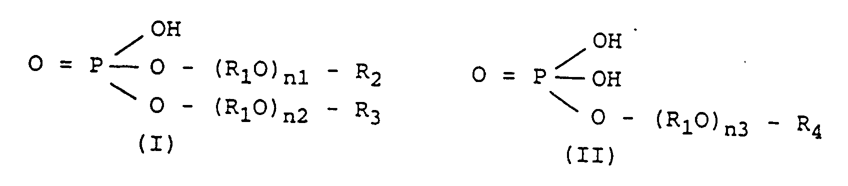 worin
- R₁ eine Alkylengruppe mit 2 bis 4 Kohlenstoffatomen darstellt,
- R₂, R₃ und R₄ jeweils eine Alkylgruppe mit 2 bis 24 Kohlenstoffatomen oder eine Alkyl-Arylgruppe, deren alkylierter Teil 1 bis 18 Kohlenstoffatome aufweist, darstellen,
- n₁ ,n₂, und n₃ eine ganze Zahl von 0 bis 15 darstellen,
wobei das bei der Bildung des Metallsalzes beteiligte Kation ein zweiwertiges oder dreiwertiges Kation ist, insbesondere eines der Gruppe umfassend Magnesium, Calcium, Aluminium, Zink und Mangan, und
- ein Formulierungsmittel, welches vorteilhafterweise aus der Gruppe umfassend die Öle und Wachse, vorzugsweise natürlich oder synthetisch, ausgewählt ist,
umfaßt.

2. Klumpenverhindernde Zusammensetzung nach Anspruch 1,
**dadurch gekennzeichnet, daß**
mindestens 40 % der Hydroxylfunktionen des Phosphorsäureesters neutralisiert sind.

3. Klumpenverhindernde Zusammensetzung nach einem der Ansprüche 1 und 2,
**dadurch gekennzeichnet, daß**
sie mindestens ein weiteres klumpenverhinderndes Produkt umfaßt, welches vorteilhafterweise aus der Gruppe umfassend die Fettsäuren und ihre Salze ausgewählt ist.

4. Klumpenverhindernde Zusammensetzung nach einem der Ansprüche 1 bis 3,
**dadurch gekennzeichnet, daß**
die Fettsäure 12 bis 20 Kohlenstoffatome aufweist und bevorzugt aus Stearinsäure gebildet ist.

5. Klumpenverhindernde Zusammensetzung nach einem der Ansprüche 1 bis 4,
**dadurch gekennzeichnet, daß**
sie ein Öl mit pflanzlichem Ursprung, oder bevorzugt ein Öl mit mineralischem Ursprung, ausgewählt aus den Paraffinölen und Naphtenölen, umfaßt.

6. Klumpenverhindernde Zusammensetzung nach Anspruch 5,
**dadurch gekennzeichnet, daß**
sie ein Paraffinöl umfaßt, welches die folgenden Merkmale aufweist:
- volumenbezogene Masse bei 15°C 875 kg/m³
- Viskositäts-Dichteverhältnis bei 40°C 20 mm²/s.
7. Klumpenverhindernde Zusammensetzung nach einem der Ansprüche 1 bis 6,
**dadurch gekennzeichnet, daß**
sie ein Paraffinwachs umfaßt, welches die folgenden Merkmale aufweist:
- Schmelzpunkt 55 bis 80°C
- Viskositäts-Dichteverhältnis bei 100°C 8 bis 25 mm²/s.

7. Klumpenverhindernde Zusammensetzung nach einem der Ansprüche 1 bis 7,
**dadurch gekennzeichnet, daß**
sie
- 2 bis 50 Gewichts-% und bevorzugt 4 bis 15 Gewichts-% Metallsalz des Phosphorsäureesters,
- 0 bis 15 Gewichts-% und bevorzugt 0 bis 10 Gewichts-% Fettsäure oder eines ihrer Salze,
- 0 bis 98 Gewichts-% und bevorzugt 35 bis 80 Gewichts-% Mineralöl und
- 0 bis 98 Gewichts-% und bevorzugt 20 bis 65 Gewichts-% Paraffinwachs
umfaßt.

8. Klumpenverhindernde Behandlung für Salze, einfache und komplexe Düngemittel und für Stickstoff-Derivate, insbesondere auf Ammoniumnitrat-Basis, die besonders in Sprengstoffen verwendet werden können,
**dadurch gekennzeichnet, daß**
man in das zu entklumpende Produkt eine wirksame Menge einer klumpenverhindernden Zusammensetzung nach einem der Ansprüche 1 bis 8 einbringt.

9. Klumpenverhindernde Behandlung nach Anspruch 9,
**dadurch gekennzeichnet, daß**
die wirksame Menge 0,01 bis 0,5 Gewichts-% bezogen auf das zu entklumpende Produkt beträgt und vorteilhafterweise zwischen 0,05 und 0,25 % liegt.
